# EUROPEAN PATENT APPLICATION

(11) **EP 2 687 488 A2**
(43) Date of publication of application: **22.01.2014**
(21) Application number: 12756994.5
(22) Date of filing: 02.03.2012
(51) Int. Cl.: C02F 1/467, C01B 11/06, C25B 1/26, C25B 9/00

(54) **OPEN-CELL TYPE APPARATUS FOR PREPARING SODIUM HYPOCHLORITE**

(30) Priority: 14.03.2011 KR 20110022432
(71) Applicant: Kim, Kyoung Soo, Pyeongtaek Si, Gyeonggi-Do 450-150 (KR); Pyo, Soo Kil, Hwaseong Si, Gyeonggi-Do 445-834 (KR); Kang, Seg Young, Pyeongtaek Si, Gyeonggi-Do 451-824 (KR)
(72) Inventor: Kim, Kyoung Soo, Pyeongtaek Si, Gyeonggi-Do 450-150 (KR); Pyo, Soo Kil, Hwaseong Si, Gyeonggi-Do 445-834 (KR); Kang, Seg Young, Pyeongtaek Si, Gyeonggi-Do 451-824 (KR)
(74) Representative: von Kreisler Selting Werner
(86) International application number: PCT/KR2012/001583
(87) International publication number: WO 2012/124914

(57) **Abstract**

Disclosed is an open cell-type apparatus for producing sodium hypochlorite based on electrolysis using soft water and salt. The apparatus includes: a sodium hypochlorite generator including a plurality of electrode plates supported by a support, a flow channel for air flow provided above the support and the electrode plates, and an air intake hole and an air exhaust hole which communicate with the flow channel; a cooling unit for lowering a temperature of the flow channel; and a controller for controlling operation of the cooling unit by detecting a temperature of the sodium hypochlorite generator. The apparatus constantly maintains an optimum temperature of the sodium hypochlorite generator in order to produce sodium hypochlorite of a high concentration with high efficiency.

## Description

### BACKGROUND OF THE INVENTION

### Field of the Invention

The present invention relates to an apparatus for producing sodium hypochlorite (NaOCl), and more particularly to an open cell-type apparatus for producing sodium hypochlorite which reduces hardness of cations deposited on a cathode and improves efficiency of electrolysis by maintaining a constant optimum temperature.

### Description of the Related Art

Generally, as a disinfection method for water treatment plants, sewage treatment plants, swimming pools, large barns, contract foodservices, etc., a chemical disinfection method or an ozone disinfection method is used. However, in many cases, we are reluctant to use these methods because of some factors. For example, these methods are not economical by requiring use of costly chemicals and are not environment-friendly due to use of hazardous chemicals and generation of chemical residues. Especially, in the case of using ozone for disinfection, there is an issue related to hazardous ozone residues. Because of these problems, in restaurants or large contract foodservices for which through disinfection and hygiene management are required to be done, collective food poisoning accident occurs.

For this reason, sodium hypochlorite (NaOCl), a chlorine-based disinfectant, which is a colorless transparent liquid with strong chlorine odor, has been preferably used. Typically, NaOCl was produced through electrolysis by supplying saline water to an electrolytic cell which is a saline water tank equipped with a series of electrodes therein.

There are some known conventional technologies related to the production of sodium hypochlorite: Korean Patent No. 0592331, "electrolytic cell for preparing sodium hypochlorite"; and Korean Patent No. 0634889, "apparatus for producing sodium hypochlorite."

However, the conventional apparatuses for preparing sodium hypochlorite has the following problem: since heat is generated in the process of electrolyzing diluted saline water in an electrolytic cell, temperature of the sodium hypochlorite obtained rises to become higher than an optimum temperature of the diluted saline water in 30 minutes after starting of operation of the apparatus, and the concentration of effective chlorine decreases depending on an operation time of the apparatus.

The information disclosed in the Background of the Invention section is only for the enhancement of understanding of the background of the invention, and should not be taken as an acknowledgment or any form of suggestion that this information forms a prior art that would already be known to a person skilled in the art.

### [Related Art Document]

Patent Document 1: Korean Patent No. 0592331
Patent Document 2: Korean Patent No. 0634889

### SUMMARY OF THE INVENTION

Accordingly, the present invention has been made keeping in mind the above problems occurring in the related art, and the present invention is intended to propose an open cell-type apparatus for producing sodium hypochlorite of a high concentration which reduces hardness of cations deposited on a cathode and improves efficiency of electrolysis by constantly maintaining an optimum temperature.

In accordance with one aspect of the present invention, there is provided an open cell-type apparatus for producing sodium hypochlorite based on electrolysis using soft water and salt, the apparatus including: a sodium hypochlorite generator including a plurality of electrode plates 25 supported by a support, a flow channel for air flow provided above the support and the electrode plates, and an air intake hole and an air exhaust hole which communicate with the flow channel; a cooling unit for lowering a temperature of the flow channel, the cooling unit being connected to the air intake hole; and a controller for controlling operation of the cooling unit by detecting a temperature of the sodium hypochlorite generator, in which the sodium hypochlorite generator includes a guide which is provided above an air intake pipe connected to the flow channel and guides air flow.

Preferably, the open cell-type apparatus further includes a sodium hypochlorite collection tank equipped with a heat exchanger, the sodium hypochlorite collection tank being installed at a downstream of a sodium hypochlorite discharge pipe of the sodium hypochlorite generator, and controlling a temperature of the soft water.

Preferably, the cooling unit may use a fan.

Preferably, the cooling unit may use an air condenser interlocking with an air compressor.

Preferably, the cooling unit may use an air cooler interlocking with an indoor unit.

Preferably, the cooling unit may use an ice cooling fan.

Preferably, the open cell-type apparatus may further include a backflow preventing unit for intercepting air flow, which is provided above an air intake pipe connected to the flow channel of the sodium hypochlorite generator, in which the backflow preventing unit is selectively provided with a baffle plate, a sheet, and an electric damper.

Preferably, the controller may control the temperature of the soft water by causing a control board to receive temperature changes of the sodium hypochlorite generator and maintains the temperature of the flow channel within a preset range.

According to the present invention, it is possible to prevent a rise in temperature during electrolysis, thereby suppressing generation of oxygen, maintaining a constant optimum temperature inside an electronic cell, and lowering hardness of cations deposited on a cathode in the electrolytic cell. These measures dramatically improve efficiency of electrolysis, enabling production of sodium hypochlorite of a high concentration.

In addition, it is possible to maintain a high concentration of sodium hypochlorite produced at low temperature, without undergoing thermal decomposition.

### BRIEF DESCRIPTION OF THE INVENTION

The above and other objects, features and other advantages of the present invention will be more clearly understood from the following detailed description when taken in conjunction with the accompanying drawings, in which:

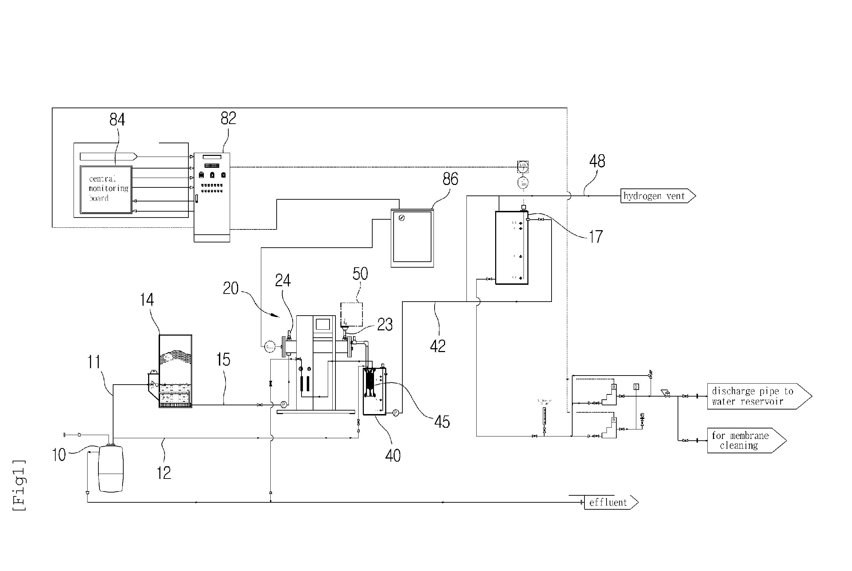

FIG. 1 is a schematic view illustrating an overall arrangement of a manufacturing apparatus according to one embodiment of the present invention;
FIG. 2 is a diagram illustrating the structure of a cooling means according to a first embodiment of the present invention;
FIG. 3 is a diagram illustrating the structure of a cooling means according to a second embodiment of the present invention;
FIG. 4 is a diagram illustrating the structure of a cooling means according to a third embodiment of the present invention;
FIG. 5 is a diagram illustrating the structure of a cooling means according to a fourth embodiment of the present invention; and

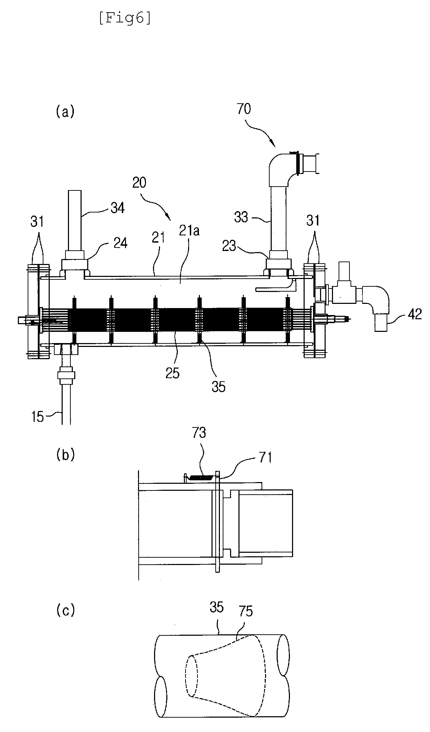

FIG. 6 is a diagram illustrating a backflow preventing unit according to the present invention.

### DETAILED DESCRIPTION OF THE INVENTION

Hereinafter, embodiments of the present invention will be described with reference to the accompanying drawings.

An apparatus for producing sodium hypochlorite according to the present invention uses electrolysis using soft water and sodium. When using a conventional manufacturing apparatus, due to heat generated during electrolysis, the temperature of sodium hypochlorite produced rises up to 40 to 50°C which is 25 to 35°C higher than the temperature of diluted saline water. This high temperature lowers an effective chlorine concentration, thus hindering sodium hypochlorite of a high concentration from being produced. Taking this circumstances into account, the present invention is intended to implement a technology of continuously producing sodium hypochlorite of a high concentration by performing electrolysis at temperature which is controlled in a manner adopted in a no-membrane open cell type apparatus.

According to the present invention, a sodium hypochlorite generator 20 having an air intake hole 23 and an air exhaust hole 24 communicating with a flow channel 21a includes a plurality of electrode plates 25. The sodium hypochlorite generator 20 is an electrolytic cell composed of a housing 21 and a series of electrode plates 25, without a membrane (ionexchange membrane), which are fixed by supports 35. Terminals 26 are fixed at respective ends of the sodium hypochlorite generator 20 by flanges 31, a sodium hypochlorite discharge pipes 42 is connected to a side surface of the housing 21. A saline water supply pipe 15 is connected to a portion of the bottom of the housing 21. In the housing 21, the flow channel 21a is provided in an upper portion of an inside space of the housing in which the electrode plates 25 and the supports 35 are not provided. The air intake hole 23 and the air exhaust hole 24 are distanced from each other and are provided in an upper part of the housing 21 which is disposed above the fluid passage 21a.

Preferably, the sodium hypochlorite generator 20 is equipped with a guide 37 which guides air to an air intake pipe 33 connected to the flow channel 21. The guide 37 may be made from the same material as the housing 21, for example, acryl resin, and may be formed in an L-shape. The guide 37 is disposed in the housing 21, in a position near the air intake hole 23, and changes direction of air flow so that the air introduced in a vertical direction can flow in a horizontal direction. If the guide 37 is not provided, the air introduced through the intake pipe 33 may blow to the electrode plate 25, thus impeding an electrolysis reaction.

A sodium hypochlorite collection tank 40 having a heat exchanger 45 is installed at a downstream side of the sodium hypochlorite discharge pipe 42 of the sodium hypochlorite generator 20, and preferably the temperature of the saline water is controlled using the heat exchanger 45.

In conventional apparatuses, a vacuum pressure is generated so that sodium hypochlorite and hydrogen can be simultaneously are suctioned through an upper part of a housing 21. For this operation, a hydrogen gas discharger is installed in an upper storage tank, which renders the apparatus dangerous.

However, according to the present invention, the sodium hypochlorite is discharged into the sodium hypochlorite collection tank 40, which is disposed in a lower position than the housing 21, via a discharge hole formed in the side surface of the housing 21, without using an additional driving force. Soft water of a soft water storage tank 10 is sent to a sodium storage tank 14 through a first soft water supply pipe 11 and also to a saline water supply pipe 15 via the heat exchanger 45 of the sodium hypochlorite collection tank 40 through a second soft water supply pipe 12. The heat generated from the sodium hypochlorite collection tank 40 is heat-exchanged with the soft water in the second soft water supply pipe 12 so that the soft water is maintained at an optimum temperature range. The optimum temperature for electrolysis of diluted saline water is 15 to 20°C, and more preferably 15°C. At this temperature, a best concentration of sodium hypochlorite can be obtained.

According to the present invention, a cooling unit 50 to lower the temperature of the flow channel 21a is connected to the air intake hole 23 of the sodium hypochlorite generator 20. In the process of operating and investigating the sodium hypochlorite generator 20, the concentration of sodium hypochlorite is maintained in 7000 to 8000 ppm. However, through the investigation, in a specific season, the concentration rose up to 9000 to 10000 ppm and the high concentration was maintained for about 5 to 10 minutes. That is, the sodium hypochlorite produced at a high temperature experiences a decrease in concentration. Specifically, when the sodium hypochlorite produced at a high temperature is stored in a storage tank, it undergoes thermal decomposition due to the high temperature so that the concentration of the sodium hypochlorite remarkably decreases.

As a result of performing various experiments in consideration of such a phenomenon, it is found that highest efficiency is obtained when inside temperature of the sodium hypochlorite generator 20 is maintained at 27 to 30°C. Table 1 shows that as for sodium hypochlorite produced at 50 to 60°C by the sodium hypochlorite generator 20, the concentration of chlorine in the sodium hypochlorite decreases by 14 to 16% due to decomposition at a high temperature in the sodium hypochlorite storage tank 17. This phenomenon is conspicuous in summer during which natural cooling is impossible.

**Table 1**

| | | | | | | | | |
|---|---|---|---|---|---|---|---|---|
| Temperature (°C) | 20 | 24 | 26 | 27 | 28 | 29 | 30 | 32 |
| Concentration (ppm) | 8000 | 8650 | 8900 | 9000 | 9200 | 9100 | 9000 | 8800 |
| Temperature (°C) | 36 | 38 | 40 | 46 | 50 | 54 | 58 | 60 |
| Concentration (ppm) | 8200 | 8000 | 7900 | 7800 | 7500 | 7300 | 7200 | 7000 |

According to the present invention, the air intake pipe 33 is connected to the air intake hole 23 of the sodium hypochlorite generator 20 so that air in the cooling unit 50 is supplied to above the flow channel 21a. This enables the inside temperature of the housing 21 to be maintained in a range of 27 to 30°C.

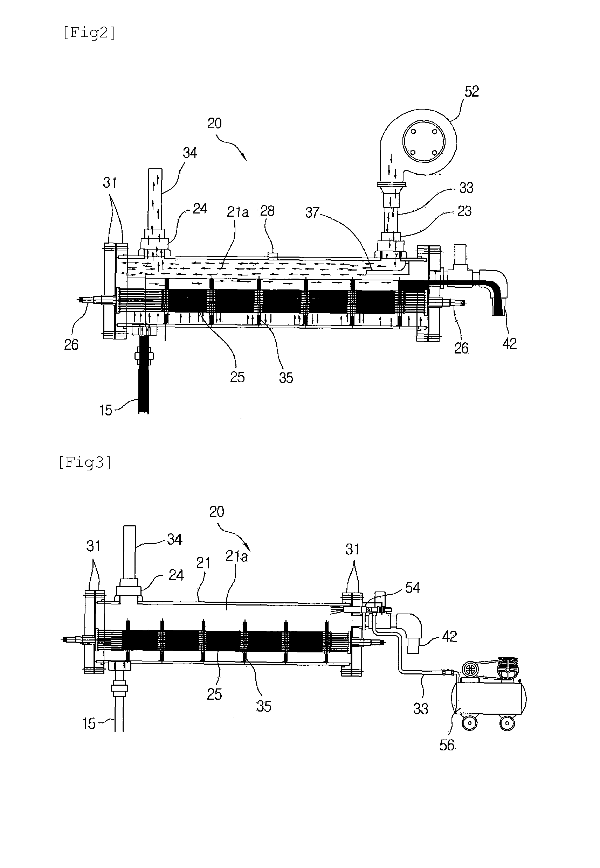

With reference to FIG. 2, according to a first embodiment, the cooling unit 50 uses a fan 52. Preferably, the fan 52 maybe disposed inside a room, in a position near the sodium hypochlorite generator 20 for convenience in piping. However, if such an indoor installation is disadvantageous in terms of maintaining the temperature of the sodium hypochlorite generator 20, the fan 52 may be disposed outside a room. Alternatively, both of an indoor fan and an outdoor fan may be installed and selectively used by a switching operation in response to temperature changes.

With reference to FIG. 3, according to a second embodiment, the cooling unit 50 uses an air condenser 54 interlocking with an air compressor 56. The air condenser 54 generates ultra speed revolution with compressed air output from the air compressor 56. In this case, the air intake hole 23 and the guide 37 illustrated in FIG. 2 may not be necessary so that the air condenser 54 may be directly connected to the flange 31.

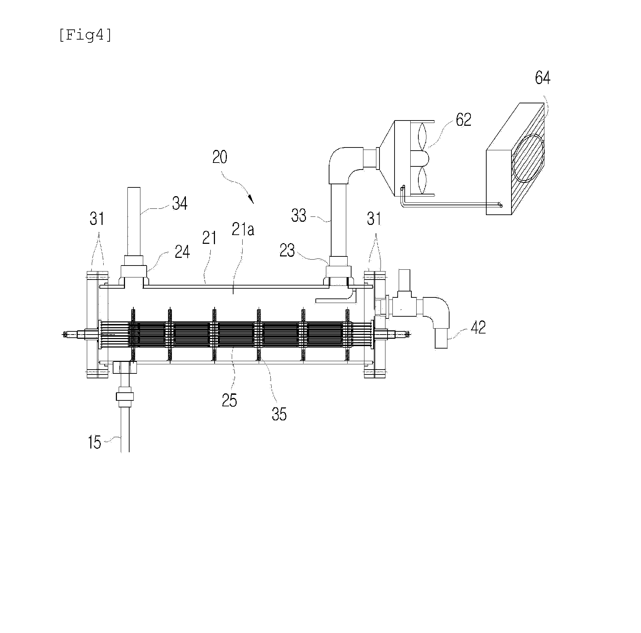

With reference to FIG. 4, according to a third embodiment, the cooling unit 50 uses an air cooler 62 interlocking with an outdoor unit 64. A coolant circulation path is formed between the air cooler 62 and the outdoor unit 64 like a general air conditioner. In a case where a room, in which the sodium hypochlorite generator 20 is installed, is equipped with an air conditioner, this air conditioner is used in combination with the above-described air cooler or with the fan 52.

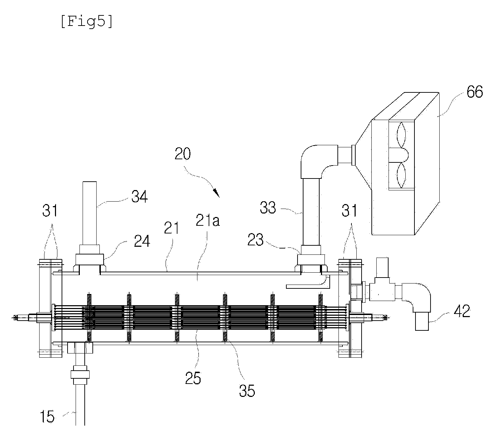

With reference to FIG. 5, according to a fourth embodiment, the cooling unit 50 uses an ice cooling fan 66. The ice cooling fan 66 has a structure of combining the fan 52 and ice or a coolant pack. In this case, the fan 52 may have a relatively small performance compared with the fan 52 according to the first embodiment. When the fourth embodiment is applied under conditions in which ice or coolant packs can be easily obtained, it is advantageous in terms of reduction in power for operating the cooling unit 500.

In addition, according to the present invention, a backflow preventing unit 70 for intercepting air flow may be further provided above the air intake hole 33 connected to the flow channel 21a of the sodium hypochlorite generator 20. The backflow preventing unit 70 includes a baffle plate 71, a sheet 72, or an electric damper. The backflow preventing unit 70 prevents backflow of hydrogen gas or moisture contained in sodium hypochlorite into the air intake pipe 33 because the backflow of hydrogen gas or moisture causes the fan 52 or a motor of the cooling unit 50 to be damaged. The baffle plate 71 is a valve for closing or opening a channel of the air intake pipe 33. The baffle plate 71 may be a semi-automatic type using a spring 73, or a full automatic type using solenoid (not shown). The sheet 75 has a tubular shape and is made from a film-type material having chemical resistance and high flexibility. The sheet 75 expands t open the channel while the cooling unit 50 is operating, and contracts to close the channel when the operation of the cooling unit 50 is stopped.

According to the present invention, a controller 80 for controlling operation of the cooling unit 50 by detecting a temperature of the sodium hypochlorite generator 20 may be further provided. The controller 80 controls the soft water storage tank 10, the salt storage tank 14, the sodium hypochlorite generator 20, the sodium hypochlorite generator collection tank 40, and the sodium hypochlorite generator storage tank 17 by using a control board 82. In the case of operating a plurality of sodium hypochlorite generators 20, a plurality of control boards 82 corresponding to the sodium hypochlorite generators 20, respectively are connected to a central monitoring board 84 so that the plurality of sodium hypochlorite generators 20 are simultaneously controlled in remote. A rectifier 86 is connected to the terminal 26 of the sodium hypochlorite generator 20.

The controller 80 receives temperature changes of the sodium hypochlorite generator 20 via the control board 82 and thus controls the temperature of the soft water introduced and the temperature of the flow channel 21a within a preset temperature range. A temperature sensor 28 for detecting the temperature of the flow channel 21a is installed in the housing 21 of the sodium hypochlorite generator 20. The control board 82 controls the temperature of the soft water introduced by adjusting an opening of a valve provided in the second soft water supply pipe 12, and controls the temperature of the flow channel 21a of the sodium hypochlorite generator 20 by switching on and off the cooling unit 50.

In addition, a vent pipe 48 branches off from the sodium hypochlorite discharge pipe 42 connected between the sodium hypochlorite collection thank 40 and the sodium hypochlorite storage tank 17. The vent pipe 48 is used to exhaust a trace amount of hydrogen gas contained in sodium hypochlorite transported from the sodium hypochlorite collection tank 40 to the sodium hypochlorite storage tank 17.

The control board 82 periodically receives not only a signal from the temperature sensor 28 of the sodium hypochlorite generator 20 but also a signal of temperature and pressure of main pipes including the first soft water supply pipe 11, the second soft water supply pipe 12, and the sodium hypochlorite discharge pipe 42. In normal mode, when ambient temperature is excessively low like in winter, the control board 82 causes the soft water to be bypassed to the second soft water supply pipe 12 so that the soft water can be heated by the heat exchanger 45 in the sodium hypochlorite collection tank 40. Conversely, when ambient temperature is excessively high like in summer, a portion of the soft water is bypassed so that the temperature of the soft water is lowered. When the temperature of the sodium hypochlorite generator 20 exceeds the preset range, 27 to 30 °C, the cooling unit 50 starts operating to blow cold air into the flow channel 21a of the sodium hypochlorite generator 20. The air introduced into the flow channel 21a guides hydrogen gas generated from the electrode plate 25 to an exhaust pipe 34 and causes only the sodium hypochlorite to be discharged into the sodium hypochlorite collection tank 40. In this case, since the hydrogen gas is separated and exhausted through the exhaust pipe 34, safety of the sodium hypochlorite generator is improved. When the temperature of the sodium hypochlorite generator 20 falls to the preset range, operation of the cooling unit 50 is stopped. This time, the operation of the backflow preventing unit 70 is manually stopped or automatically controlled using the electric damper.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An open cell-type apparatus for producing sodium hypochlorite based on electrolysis using soft water and salt, the apparatus comprising:
a sodium hypochlorite generator including a plurality of electrode plates 25 supported by a support, a flow channel for air flow provided above the support and the electrode plates, and an air intake hole and an air exhaust hole which communicate with the flow channel;
a cooling unit for lowering a temperature of the flow channel, the cooling unit being connected to the air intake hole; and
a controller for controlling operation of the cooling unit by detecting a temperature of the sodium hypochlorite generator,
wherein the sodium hypochlorite generator includes a guide which is provided above an air intake pipe connected to the flow channel and guides air flow.

2. The open cell-type apparatus according to claim 2, further comprising a sodium hypochlorite collection tank equipped with a heat exchanger, the sodium hypochlorite collection tank being installed at a downstream of a sodium hypochlorite discharge pipe of the sodium hypochlorite generator, and controlling a temperature of the soft water.

3. The open cell-type apparatus according to claim 1, wherein the cooling unit uses a fan.

4. The open cell-type apparatus according to claim 1, wherein the cooling unit uses an air condenser interlocking with an air compressor.

5. The open cell-type apparatus according to claim 1, wherein the cooling unit uses an air cooler interlocking with an indoor unit.

6. The open cell-type apparatus according to claim 1, wherein the cooling unit uses an ice cooling fan.

7. The open cell-type apparatus according to claim 1, further comprising a backflow preventing unit for intercepting air flow, which is provided above an air intake pipe connected to the flow channel of the sodium hypochlorite generator,
wherein the backflow preventing unit is selectively provided with a baffle plate, a sheet, and an electric damper.

8. The open cell-type apparatus according to claim 1, wherein the controller controls the temperature of the soft water by causing a control board to receive temperature changes of the sodium hypochlorite generator and maintains the temperature of the flow channel within a preset range.
